# EUROPEAN PATENT SPECIFICATION

(11) **EP 3 017 382 B1**
(45) Date of publication and mention of the grant of the patent: **11.11.2020**
(21) Application number: 13741871.1
(22) Date of filing: 02.07.2013
(51) Int. Cl.: G06F 17/16

(54) **CACHING CONTENT**
ZWISCHENSPEICHERINHALT
CONTENU DE MISE EN CACHE

(43) Date of publication of application: 11.05.2016
(73) Proprietor: Telefonaktiebolaget LM Ericsson (publ), 164 83 Stockholm (SE)
(72) Inventor: SLSSINGAR, Michael John, S-12746 Skärholmen (SE)
(74) Representative: Brann AB
(86) International application number: PCT/SE2013/050844
(87) International publication number: WO 2015/002580

(56) References cited:
- EP-A1- 2 503 473
- EP-A1- 2 503 473
- EP-A2- 2 480 004
- EP-A2- 2 480 004
- US-A1- 2002 092 026
- US-A1- 2009 249 067
- US-A1- 2009 249 067

## Description

### TECHNICAL FIELD

The invention relates to a network node as in claim 1 and a computer program as in claim 6 for caching content.

### BACKGROUND

Content distribution is a challenging task in cellular communication networks and other type of networks. In particular, with increased popularity of video content, higher requirements on bandwidth results in a higher strain on the networks.

One way to reduce network traffic is by caching. With caching, a device in the network stores a piece of content, which then reduces the need for content delivery over the network when a piece of content is requested which is stored in the cache.

However, the caching solutions in the prior art fail to significantly reduce network traffic for when a piece of content gains popularity, but may only be consumed very few times. Such content can e.g. be viral videos, breaking news or video links being spread on social networks.

Document US20020092026 A1 discloses a method for the selection of digital content for broadcast delivery to multiple users.

### SUMMARY

It is an object to provide a way of caching content which is proactive and which can reduce network traffic for popular content even before a user requests the content.

The invention is defined by the appended claims.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

The invention is now described, by way of example, with reference to the accompanying drawings, in which:
Fig 1 is a schematic diagram illustrating an environment in which embodiments presented herein can be applied;
Fig 2 is a sequence diagram illustrating communication between a network node and a client device of Fig 1 for caching content;
Fig 3 is a sequence diagram illustrating communication between a network node, a client device and a content server of Fig 1 for when there is a cache miss;
Figs 4A-B are flow charts illustrating methods performed in a client device of Fig 1 for caching content;
Figs 5A-B are flow charts illustrating methods performed in the network node of Fig 1 for caching content;
Fig 6 is a schematic diagram showing some components of the network node of Fig 1;
Fig 7 is a schematic diagram showing some components of the client device of Fig 1;
Fig 8 is a schematic diagram showing functional modules of the network node of Figs 1 and 6;
Fig 9 is a schematic diagram showing functional modules of the client device of Figs 1 and 7;
Fig 10 shows one example of a computer program product comprising computer readable means; and
Fig 11 is a schematic diagram illustrating a vehicle comprising the client device 2 of Figs 1, 7 and 9.

### DETAILED DESCRIPTION

The invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description.

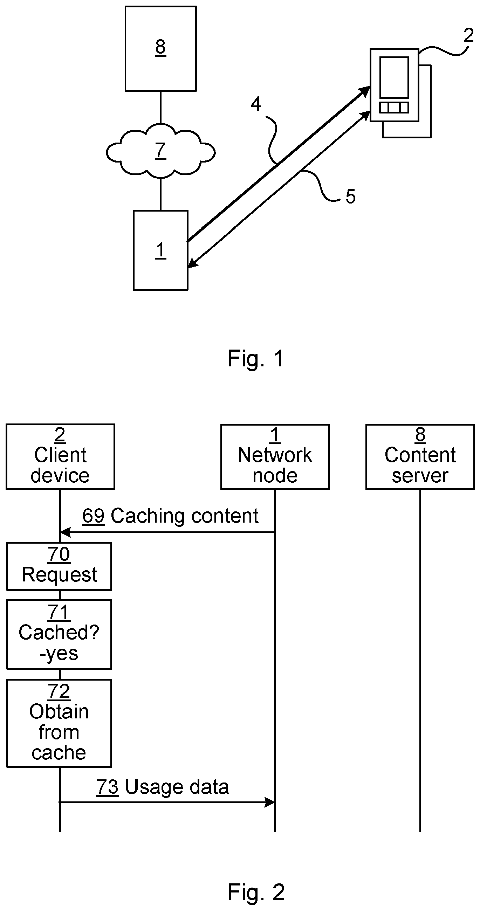

Fig 1 is a schematic diagram illustrating an environment in which embodiments presented herein can be applied. A content server 8 provides content to be presented on one or more client devices 2. The content can e.g. comprise video, audio, still images and/or text. The content server 8 is connected via a network 7 to a network node 1. The network 7 can be a local area network and/or a wide area network such as the Internet, allowing great physical separation between the content server 8 and the network node 1.

The network node 1 controls what content is to be cached in a client device cache (not shown) in the client devices 2. There is a point to multipoint (P2MP) downlink connection 4 between the network node 1 and the client devices 2. The P2MP connection 4 can e.g. comprise a broadcast connection, e.g. using Multimedia Broadcast Multicast Service (MBMS) or eMBMS (evolved MBMB) as specified by 3GPP (Third Generation Partnership Project), over a cellular communication network. Alternatively or additionally, the P2MP connection comprises a multicast connection, e.g. using IP (Internet Protocol) multicast, MBMS or eMBMS. There is also a bi-directional unicast connection 5 between the network node 1 and each one of the client devices 2. The unicast connection 5 can e.g. be a regular IP connection e.g. using a cellular communication network. In one embodiment, there is one such network node 1 for each operator. In one embodiment, there are several network nodes 1, each one of which is responsible for a subset of the network, e.g. for a subset of cells of a cellular communication network.

When a cellular communication network is used for the P2MP connection 4 and/or the bi-directional unicast connection 5, the cellular communication network can be any suitable network allowing communication between the network node 1 and the client devices 2 as described below. The cellular communication network can e.g. comply with any one or a combination of LTE (Long Term Evolution), UMTS utilising W-CDMA (Wideband Code Division Multiplex), CDMA2000 (Code Division Multiple Access 2000), or any other current or future wireless network, as long as the principles described hereinafter are applicable.

The network node 1 is any device capable of performing one or more of the embodiments presented herein to be performed by the network node 1. For example, the network node 1 can be implemented using a server. Optionally, the network node 1 is implemented using a plurality of servers, e.g. for improved failure handling capabilities and/or load balancing.

Alternatively or additionally, the P2MP connection 4 and/or the bi-directional unicast connection 5 may comply with other suitable wireless standards such as WiFi (e.g. any of the IEEE 802.11x standards) or WiMAX (Worldwide Interoperability for Microwave Access).

The client devices 2 can be implemented in any suitable way to allow a user to consume content. For example, the client devices 2 can be implemented using any one or more of a mobile communication terminal (also known as a user equipment, cellular phone, smartphone or mobile phone), a tablet computer, a portable general purpose computer, etc. The client devices 2 may optionally be included in a host device, such as a media player, a vehicle, etc.

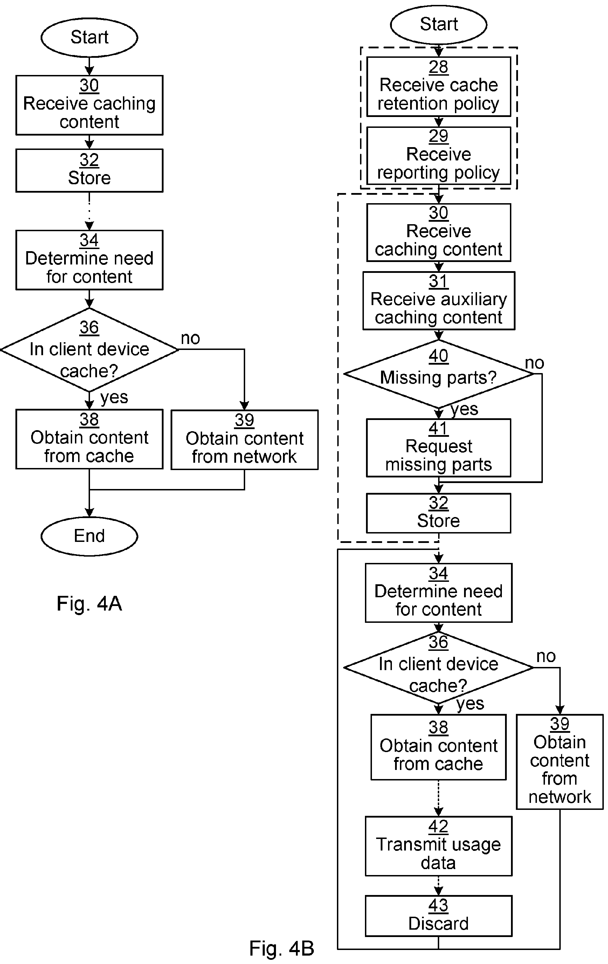

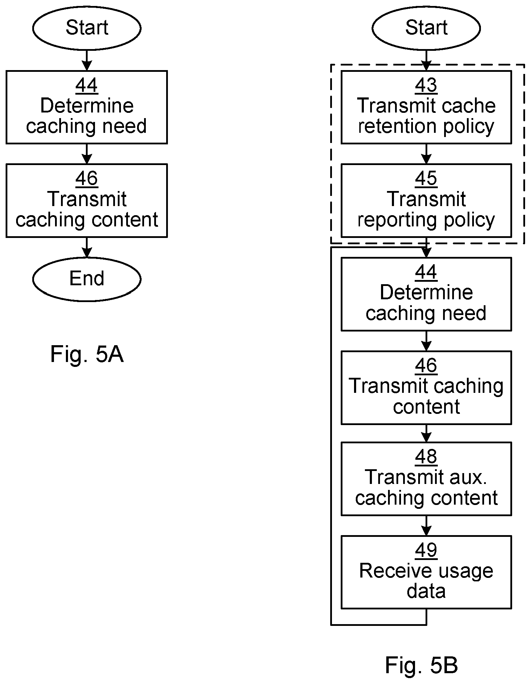

Fig 2 is a sequence diagram illustrating communication between a network node 1 and a client device 2 of Fig 1 for caching content, when there is a cache hit. More details are described below with reference to the flow charts of Figs 4A-B and Figs 5A-B.

The network node 1 pushes caching content 69 to the client device 2. It is to be noted that the distribution of caching content is controlled by the network node 1 and not by the client device 2. In this way, popular content can be identified and pushed to the client device to make the content available locally.

When a request 70 for a particular piece of content is generated in the client device, the cache is checked 71. In this example, there is a hit, i.e. the piece of content is found in the cache.

The client device 2 then obtains the content from the cache 72, without having to communicate with any other nodes.

Eventually, the client device 2 sends usage data 73 to the network node 1, to allow the network node 1 (or other nodes in the network) to gather statistics on cache performance and/or usage. The usage data indicates what content in the client device cache is consumed. The usage data may also indicate for how long the content is and whether the user skips particular parts of the content.

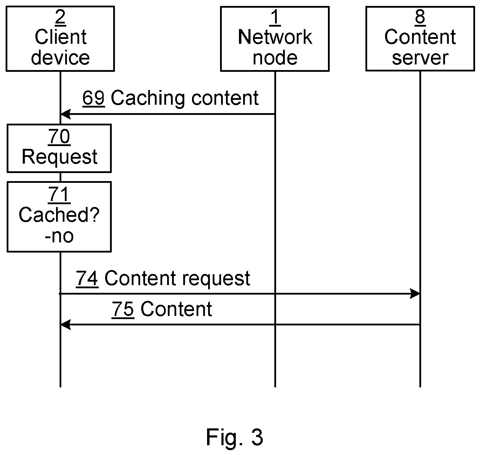

Fig 3 is a sequence diagram illustrating communication between a network node 1, a client device 2 and a content server 8 of Fig 1 for caching content when there is a cache miss. This sequence is similar to the sequence of Fig 2 and only differences will be described here.

When a request 70 for a particular piece of content is generated in the client device, the cache is checked 71. In this example, there is a miss, i.e. the piece of content is not found in the cache.

Hence, the client device 2 sends a content request 74 to the content server 8, which responds with the content 75 in question, either with a file transfer, e.g. using HTTP (Hypertext Transfer Protocol) or FTP (File Transfer Protocol), or with streaming media, e.g. using MBMS or RTP (Real-time Transfer Protocol).

Fig 4A is a flow chart illustrating one embodiment of a method for caching content. The method is performed in the client device 2 of Fig 1.

In a *receive caching content* step 30, caching content is received from a network node, the transmission of caching content being initiated by the network node. In other words, the caching content is pushed to the client device from, and controlled by, the network node.

In one embodiment, the caching content is received over a broadcast connection. Broadcast connections are particularly resource efficient when one piece of content is to be distributed to many client devices, such as for populating client device caches with caching content.

In one embodiment, the caching content is received over a multicast connection. Multicast connections can also be used for efficient distribution of caching content to a plurality of client devices.

In one embodiment, the caching content is received over a unicast connection. While unicast connections are not as efficient for distributing caching content to a plurality of client devices, the unicast connection is more often available and requires no extra infrastructure to support caching content distribution using broadcast and/or multicast connections.

In a *store* step 32, the caching content is stored in a client device cache in the client device. Optionally, the caching content is stored in an encrypted form. A user of the client device is thereby not able to discover or de-encrypt the client device cache contents unless a request is made (by the user) for a specific piece of content which results in a cache hit in the client device cache. In a *determine need for content* step 34, a need to obtain requested content is determined. For example, this can be an HTTP request for a piece of content.

In a conditional *in client device cache* step 36, the client device checks whether the client device cache comprises caching content corresponding to the requested content, i.e. whether there is a hit in the client device cache. If this is true, the method continues to an *obtain content from cache* step 38. Otherwise, the method continues to an *obtain contentfrom network* step 39. This step can e.g. use a URI (Uniform Resource Identifier), such as an URL (Uniform Resource Locator) as a key for checking the content of the client device cache.

In the *obtain content from cache* step 38, the requested content is obtained from the client device cache when the client device cache comprises caching content corresponding to the requested content. In this way, no network traffic is generated to make the requested content available.

In the *obtain contentfrom network* step 39, the requested content is obtained from the content server, e.g. using file transfer or streaming.

The conditional *in client device* step 36, *obtain content from cache* step 38 and *obtain contentfrom network* step 39 can e.g. be realised by a cache being implemented using an HTTP proxy. In this way, HTTP requests for content stored in the client device cache are served from locally stored content and HTTP requests for content not stored in the client device cache are routed to conventional content source. Using an HTTP proxy gives a transparency to applications of the client device requesting the content. In other words, the applications are not aware of any client device cache presence and do not need to be modified in any way to take advantage of the client device cache.

It is to be noted that there may be additional caches in the network upstream from the client device which are not described in more detail here.

Using this method, the network node can preload content into the client device cache. This makes the content available even prior to the user of the client device having indicated an interest in the piece of content. For example, content can become extremely popular in a short amount time and by preloading the content in client device caches, the network is relieved of later having to serve each individual request for the piece of content.

Fig 4B is a flow chart illustrating one embodiment of a method for caching content. The method of Fig 4B is similar to the method of Fig 4A and only steps which are new or modified compared to the method of Fig 4A are described here. In this embodiment, optional functionality is included, such as caching policies, auxiliary content and user data reporting.

In an optional *receive cache retention policy* step 28, a cache retention policy is received from the network node. This is used for the client device to know when it should discard caching content stored in the client device cache.

In an optional *receive reporting policy* step 29, a reporting policy is received from the network node. The reporting policy is used to control how usage data is transmitted to the network node. The reporting policy may comprise an indication to encrypt usage data when it is sent to the network from the client device.

In one embodiment, the cache retention policy and reporting policy are combined in a single message and thus received together.

It is to be noted that the *receive cache retention policy* step 28 and the *receive reporting policy* step 29 do not need to be performed sequentially in relation to the other steps and can be performed in one or more separate execution processes.

The retention policy and the reporting policy can be received over the same connection type (e.g. broadcast, multicast or unicast) as the caching content, or using another connection type.

In an optional *receive auxiliary caching content* step 31, auxiliary caching content is received from the network node. Also the transmission of the auxiliary caching content is initiated by the network node. The auxiliary caching content is optionally encrypted. The auxiliary caching content can e.g. be advertisements.

In an optional conditional *missing parts* step 40, it is determined whether there are any missing parts in the received caching content. If this is the case, the method continues to a *request missing parts* step 41. Otherwise, the method continues to the *store* step 32. The missing parts can e.g. be a missing IP packet or a discarded IP packet due to CRC (Cyclic Redundancy Check) failure.

In the *request missing parts* step 41, the missing parts are requested from the network node or from the content server. The missing parts can be delivered over a unicast connection, a multicast connection or over a broadcast connection.

In the *obtain content from cache* step 38, when there is auxiliary content, the auxiliary content can be combined with the requested content. This can e.g. be a concatenation of the auxiliary content and the requested content into one file. The auxiliary content can e.g. be advertisements which could be general advertisements or advertisements which are tailored to the user of the particular client device or for a geographical area.

In an optional *transmit usage data* step 42, usage data of the client device cache is transmitted to the network node. When a reporting policy has been received, this step comprises transmitting usage data in accordance with the reporting policy. For example, when the reporting policy comprises an indication to encrypt usage data, this step comprises encrypting the usage data and transmitting the encrypted usage data. Moreover, when auxiliary content (such as advertisements) is provided, usage data can include statistics on how much of the auxiliary content is shown and whether any hyperlinks in the auxiliary content are followed.

In an optional *discard* step 43, caching content is discarded when expired in accordance with the cache control policy. This implies that a timer functionality is initiated when respective content is being cached.

It is to be noted that the *transmit user data* step 42 and *discard* step 43 do not need to be performed sequentially in relation to the other steps and can be performed in separate execution processes. Moreover, the steps from the *determine need for content* step 34 to the *obtain* steps 38-39 can be performed independently from the other steps.

Fig 5A is a flow chart illustrating one embodiment of a method for caching content in a client device, being one of client devices 2 of Fig 1. The method is performed in the network node 1 of Fig 1. The method is executed for a set of client devices.

In a *determine caching need* step 44, the network node determines a need to store caching content in the client devices. This can e.g. be due to an increased popularity of a particular piece of content in the network. In one embodiment, there is a threshold value which a popularity measurement for a piece of content needs to exceed for the network node to determine that there is a need to cache the piece of content in question.

Optionally, this can include a geographical aspect, whereby the network node determines that a piece of content is to be cached in client devices in a particular area. This can be useful in situations such as concerts or sport events, where a large number of users in a limited geographical area may request or may be expected to request the same piece of content from the network.

Rules for determining what content is to be cached in the client device caches can optionally be configured by the operator of the network.

In a *transmit caching content* step 46, caching content is transmitted to the client devices. This transmission of caching content is initiated by the network node. In other words, the caching content is pushed to the client devices and is not a direct result of a request for content from a client device, in contrast to conventional distribution of content which may be cached by client devices. Optionally, the caching content is encrypted prior to transmitting to the client devices. Since the users of the client devices are not in control of what content is to be cached on the client devices, encryption prevents the users of the client device from browsing the client device cache and makes unapproved access (e.g. by hacking the client device) to the client device cache significantly more difficult. Moreover, there may be situations where popular content may be morally questionable to some users, but is still pushed to client devices due to client device caching rules. In such situations, the encryption of the content prevents users from even knowing what content is stored in the client device cache, and the content is only made available when explicitly requested by the users.

In one embodiment, the content is transmitted to the client devices over a broadcast connection.

In one embodiment, the content is transmitted to the client devices over a multicast connection.

In one embodiment, the content is transmitted to the client devices over a unicast connection.

Fig 5B is a flow chart illustrating one embodiment of a method for caching content. The method of Fig 5B is similar to the method of Fig 5A and only steps which are new of modified compared to the method of Fig 5A are described here. In this embodiment, optional functionality is included, such as providing caching policies to client devices, providing auxiliary content and receiving user data reporting.

In an optional *transmit cache retention policy* step 43, the cache retention policy is transmitted to the client devices. This step corresponds to the *receive cache retention policy* step 28 of Fig 4B.

In an optional *transmit reporting policy* step 45, the reporting policy is transmitted to the client devices. This step corresponds to the *receive reporting policy* step 29 of Fig 4B.

In an optional *transmit auxiliary caching content* step 48, auxiliary caching content is transmitted to the client devices for combining with caching content. In one embodiment, specific caching content can be combined with specific auxiliary caching content, at the network node, e.g. at the choice of the operator or service provider. Also the transmission of the auxiliary caching content is initiated by the network node.

In an optional *receive usage data* step 49, usage data is received from the client devices. This step corresponds to the *transmit usage data* step 42 of Fig 4B. The usage data can e.g. be used as part in the determination of what content is popular in the *determine caching need* step 44. The usage data can then be aggregated and used for post-processing and analysis. Optionally, the usage data can also be used for charging.

It is to be noted that the *receive usage data* step 49 may be performed independently for the other steps of this method.

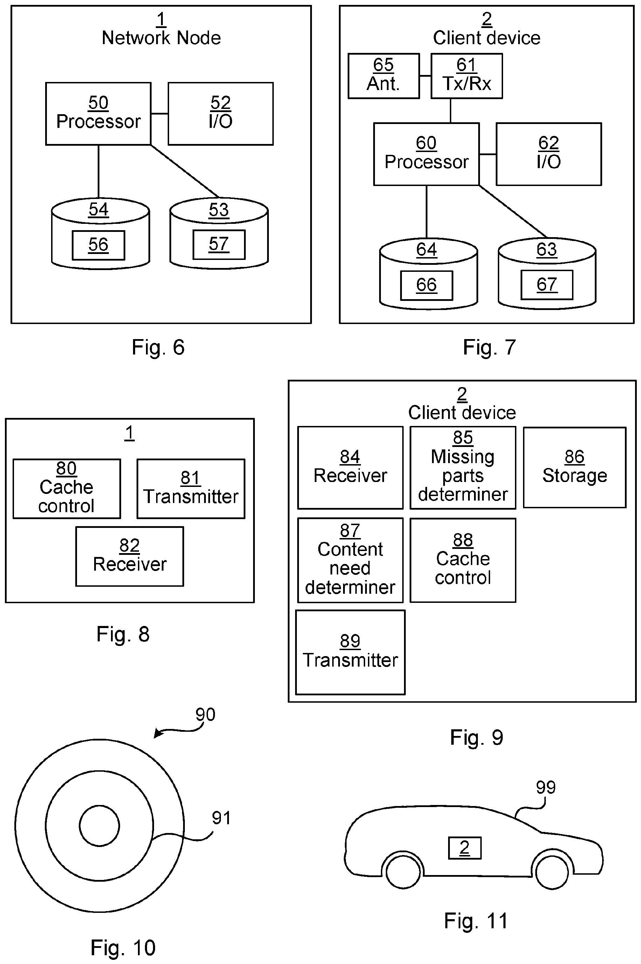

Fig 6 is a schematic diagram showing some components of the network node of Fig 1. A processor 50 is provided using any combination of one or more of a suitable central processing unit (CPU), multiprocessor, microcontroller, digital signal processor (DSP), application specific integrated circuit etc., capable of executing software instructions 56 stored in a memory 54, which can thus be a computer program product. The processor 50 can be configured to execute the methods described with reference to Figs 5A-B above.

The memory 54 can be any combination of read and write memory (RAM) and read only memory (ROM). The memory 54 also comprises persistent storage, which, for example, can be any single one or combination of magnetic memory, optical memory, solid state memory or even remotely mounted memory.

A data memory 53 is also provided for reading and/or storing data 57 during execution of software instructions in the processor 50. The data memory 53 can be any combination of read and write memory (RAM) and read only memory (ROM).

The network node 1 further comprises an I/O interface 52 for communicating with other external entities, e.g. using a wired network connection such as Ethernet. Optionally, the I/O interface 52 also includes a user interface.

The network node 1 optionally comprises one or more transceivers (not shown), comprising analogue and digital components, and a suitable number of antennas (not shown) for wireless communication with client devices.

The network node 1 can be a device for the purposes described herein. Alternatively, the network node forms part of a device providing also other functionality, such as a radio base station, or a Broadcast/Multicast Service Center (BMSC).

Other components of the network node 1 are omitted in order not to obscure the concepts presented herein.

Fig 7 is a schematic diagram showing some components of the client devices of Fig 1, here represented by a single client device 2. As mentioned above, the client devices 2 can be implemented using any one or more of a mobile communication terminal (also known as a user equipment, cellular phone, smartphone or mobile phone), a tablet computer, a portable general purpose computer, etc. The client devices 2 may optionally be included in a host device, such as a media player, a vehicle, etc.

A processor 60 is provided using any combination of one or more of a suitable central processing unit (CPU), multiprocessor, microcontroller, digital signal processor (DSP), application specific integrated circuit etc., capable of executing software instructions 66 stored in a memory 64, which can thus be a computer program product. The processor 60 can be configured to execute the methods described with reference to Figs 4A-B above.

The memory 64 can be any combination of read and write memory (RAM) and read only memory (ROM). The memory 64 also comprises persistent storage, which, for example, can be any single one or combination of magnetic memory, optical memory, solid state memory or even remotely mounted memory.

A data memory 63 is also provided for reading and/or storing data during execution of software instructions in the processor 60. The data memory 63 can be any combination of read and write memory (RAM) and read only memory (ROM), e.g. in the form of a persistent storage, which, for example, can be any single one or combination of magnetic memory, optical memory, solid state memory or even remotely mounted memory. The data memory 63 can e.g. comprise a client device cache 67 for storing content under the control of a network node.

The client device 2 further comprises an I/O interface 62 for communicating with other external entities such as the network node, e.g. using a wired network connection such as Ethernet. The I/O interface can optionally comprise a basic or more complete user interface including any of a display, input devices (input keys, touch sensitivity of the display, etc.), speaker, microphone, etc.

The client device 2 also comprises one or more transceivers 61, comprising analogue and digital components, and a suitable number of antennas 65 for wireless communication with the network node.

Other components of the client device 2 are omitted in order not to obscure the concepts presented herein.

Fig 8 is a schematic diagram showing functional modules of the network node 1 of Figs 1 and 6. The modules can be implemented using software instructions such as a computer program executing in the network node 1 and/or using hardware, such as application specific integrated circuits, field programmable gate arrays, discrete logical components, transceivers, etc. The modules correspond to the steps in the methods illustrated in the flow charts of Figs 5A-B.

A cache control module 80 is arranged to determine a caching need for client devices and may also make use of usage data provided from client devices when determining a caching need. This module corresponds to the *determine caching need* step 44 of Figs 5A-B.

A transmitter 81 is arranged to transmit caching content and optionally the auxiliary caching content, cache retention policy and reporting policy to the client devices. This module corresponds to the *transmit caching content* step 46 of Figs 5A-B and the *transmit cache retention policy* step 43, the *transmit reporting policy* step 45 and the *transmit auxiliary caching content* step 48 of Fig 5B.

A receiver 82 is arranged to receive usage data from client devices. This module corresponds to the *receive usage data* step 49 of Fig 5B.

Fig 9 is a schematic diagram showing functional modules of the client device of Figs 1 and 7. The modules can be implemented using software instructions such as a computer program executing in the network node 1 and/or using hardware, such as application specific integrated circuits, field programmable gate arrays, discrete logical components, transceivers, etc. The modules correspond to the steps in the methods illustrated in the flow charts of Figs 4A-B.

A receiver 84 is arranged to receive the caching content. Optionally the receiver 84 is arranged to receive the cache retention policy, the reporting policy and auxiliary content. This module corresponds to the *receive caching content* step 30 of Figs 4A-B and the *receive cache retention policy* step 28, *the receive reporting policy* step 29 and *receive auxiliary caching content* step 31 of Fig 4B.

An optional missing parts determiner 85 is arranged to determine whether there are any missing parts in received caching content. This module corresponds to the conditional *missing parts* step 40 of Fig 4B.

A storage module 86 is arranged to store caching content and any auxiliary caching content. This module corresponds to the *store* step 32 of Fig 4B.

A content need determiner 87 is arranged to determine when there is a need for content. This step corresponds to the *determine need for content* step 34 of Figs 4A-B.

A cache control module 88 is arranged to control the client device cache. In particular it is arranged to obtain content from cache and optionally to discard content. This module corresponds to the conditional *in client device cache* step 36 and *obtain contentfrom cache* step 38 of Figs 4A-B and the *discard* step 43 of Fig 4B.

A transmitter 89 is arranged to send usage data to the network node and to transmit a request for missing parts. This module corresponds to the *obtain contentfrom network* step 39 of Figs 4A-B the *transmit usage data* step 42 and the *request missing parts* step of Fig 4B.

Fig 10 shows one example of a computer program product 90 comprising computer readable means. On this computer readable means a computer program 91 can be stored, which computer program can cause a processor to execute a method according to embodiments described herein. In this example, the computer program product is an optical disc, such as a CD (compact disc) or a DVD (digital versatile disc) or a Blu-Ray disc. As explained above, the computer program product could also be embodied in a memory of a device, such as the computer program product 56 of Fig 6 or the computer program product 66 of Fig 7. While the computer program 91 is here schematically shown as a track on the depicted optical disk, the computer program can be stored in any way which is suitable for the computer program product.

Fig 11 is a schematic diagram illustrating a vehicle comprising the client device 2 of Figs 1, 7 and 9. The vehicle 99 can be any suitable vehicle for transportation of people and/or goods on land, sea, air or space. The vehicle 99 comprises a client device 2. The client device 2 is explained in more detail above.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A network node (1) for providing a piece of caching content to a plurality of client devices (2), the network node (1) comprising:
a processor (50); and
a memory (54) storing instructions (56) that, when executed by the processor (50), cause the network node (1) to:
determine a need to store the piece of caching content in the plurality of client devices (2), wherein to determine the need, the instructions (56) that, when executed by the processor (50), cause the network node (1) to determine a popularity measurement for the piece of caching content;
encrypt the piece of caching content; and
transmit the encrypted piece of caching content to the plurality of client devices (2) over a broadcast connection, the transmission of the encrypted piece of caching content being initiated by the network node (1).

2. The network node (1) according to claim 1, wherein the instructions (56) to transmit the encrypted piece of caching content comprises instructions (56) that, when executed by the processor (50), cause the network node (1) to transmit the encrypted piece of caching content, wherein the encrypted piece of caching content is controlled by the network node (1).

3. The network node (1) according to any one of claims 1 or 2, further comprising instructions (56) that, when executed by the processor (50), cause the network node (1) to:
transmit auxiliary piece of caching content to the plurality of client devices (2) for combining with the encrypted piece of caching content, the transmission of the auxiliary piece of caching content being initiated by the network node (1).

4. The network node (1) according to any one of claims 1 to 3, further comprising instructions (56) that, when executed by the processor (50), cause the network node (1) to:
transmit a cache retention policy to the plurality of client devices (2).

5. The network node (1) according to any one of claims 1 to 4, further comprising instructions (56) that, when executed by the processor (50), cause the network node (1) to:
transmit a reporting policy to the plurality of client devices (2).

6. A computer program (91) comprising computer program code which, when run on a network node (1), causes the network node (1) to:
determine a need to store a piece of caching content in a plurality of client devices (2), wherein to determine the need, the computer program code which, when run on the network node (1), causes the network node (1) to determine a popularity measurement for the piece of caching content;
encrypt the piece of caching content; and
transmit the encrypted piece of caching content to the plurality of client devices (2) over a broadcast connection, the transmission of the encrypted piece of caching content being initiated by the network node (1).

7. A computer program product (56, 90) comprising the computer program (91) according to claim 6 and a computer readable means on which the computer program (91) is stored.

## Patentansprüche

1. Netzwerkknoten (1) zum Bereitstellen eines Zwischenspeicherinhalts für eine Vielzahl von Client-Vorrichtungen (2), wobei der Netzwerkknoten (1) Folgendes umfasst:
einen Prozessor (50), und
einen Speicher (54), der Anweisungen (56) speichert, die, wenn sie von dem Prozessor (50) ausgeführt werden, veranlassen, dass der Netzwerkknoten (1):
eine Notwendigkeit des Speicherns des Zwischenspeicherinhalts in der Vielzahl von Client-Vorrichtungen (2) bestimmt, wobei, um die Notwendigkeit zu bestimmen, die Anweisungen (56), die, wenn sie von dem Prozessor (50) ausgeführt werden, veranlassen, dass der Netzwerkknoten (1) eine Popularitätsmessung für den Zwischenspeicherinhalt bestimmt;
den Zwischenspeicherinhalt verschlüsselt; und
den verschlüsselten Zwischenspeicherinhalt zu der Vielzahl von Client-Vorrichtungen (2) über eine Broadcast-Verbindung überträgt, wobei die Übertragung des verschlüsselten Zwischenspeicherinhalts von dem Netzwerkknoten (1) eingeleitet wird.

2. Netzwerkknoten (1) nach Anspruch 1, wobei die Anweisungen (56) zum Übertragen des verschlüsselten Zwischenspeicherinhalts Anweisungen (56) umfassen, die, wenn sie von dem Prozessor (50) ausgeführt werden, veranlassen, dass der Netzwerkknoten (1) den verschlüsselten Zwischenspeicherinhalt überträgt, wobei der verschlüsselte Zwischenspeicherinhalt von dem Netzwerkknoten (1) gesteuert wird.

3. Netzwerkknoten (1) nach einem der Ansprüche 1 oder 2, ferner umfassend Anweisungen (56), die, wenn sie von dem Prozessor (50) ausgeführt werden, veranlassen, dass der Netzwerkknoten (1):
einen zusätzlichen Zwischenspeicherinhalt zu der Vielzahl von Client-Vorrichtungen (2) zur Kombination mit dem verschlüsselten Zwischenspeicherinhalt überträgt, wobei die Übertragung des zusätzlichen Zwischenspeicherinhalts von dem Netzwerkknoten (1) eingeleitet wird.

4. Netzwerkknoten (1) nach einem der Ansprüche 1 bis 3, ferner umfassend Anweisungen (56), die, wenn sie von dem Prozessor (50) ausgeführt werden, veranlassen, dass der Netzwerkknoten (1):
eine Zwischenspeicheraufbewahrungsrichtlinie zu der Vielzahl von Client-Vorrichtungen (2) überträgt.

5. Netzwerkknoten (1) nach einem der Ansprüche 1 bis 4, ferner umfassend Anweisungen (56), die, wenn sie von dem Prozessor (50) ausgeführt werden, veranlassen, dass der Netzwerkknoten (1):
eine Berichterstattungsrichtlinie zu der Vielzahl von Client-Vorrichtungen (2) überträgt.

6. Computerprogramm (91), umfassend Computerprogrammcode, der, wenn er an einem Netzwerkknoten (1) ausgeführt wird, veranlasst, dass der Netzwerkknoten (1):
eine Notwendigkeit des Speicherns eines Zwischenspeicherinhalts in einer Vielzahl von Client-Vorrichtungen (2) bestimmt, wobei, um die Notwendigkeit zu bestimmen, der Computerprogrammcode, der, wenn er an dem Netzwerkknoten (1) ausgeführt wird, veranlasst, dass der Netzwerkknoten (1) eine Popularitätsmessung für den Zwischenspeicherinhalt bestimmt;
den Zwischenspeicherinhalt verschlüsselt; und
den verschlüsselten Zwischenspeicherinhalt zu der Vielzahl von Client-Vorrichtungen (2) über eine Broadcast-Verbindung überträgt, wobei die Übertragung des verschlüsselten Zwischenspeicherinhalts von dem Netzwerkknoten (1) eingeleitet wird.

7. Computerprogrammprodukt (56, 90), umfassend das Computerprogramm (91) nach Anspruch 6 und ein computerlesbares Mittel, auf dem das Computerprogramm (91) gespeichert ist.

## Revendications

1. Nœud de réseau (1) pour fournir un élément de contenu de mise en cache à une pluralité de dispositifs clients (2), le nœud de réseau (1) comprenant :
un processeur (50) ; et
une mémoire (54) stockant des instructions (56) qui, lorsqu'elles sont exécutées par le processeur (50), amènent le nœud de réseau (1) à :
déterminer un besoin de stocker l'élément de contenu de mise en cache dans la pluralité de dispositifs clients (2), dans lequel pour déterminer le besoin, les instructions (56) qui, lorsqu'elles sont exécutées par le processeur (50), amènent le nœud de réseau (1) à déterminer une mesure de popularité pour l'élément de contenu de mise en cache ;
chiffrer l'élément de contenu de mise en cache ; et
transmettre l'élément de contenu de mise en cache chiffré à la pluralité de dispositifs clients (2) sur une connexion de diffusion, la transmission de l'élément de contenu de mise en cache chiffré étant initiée par le nœud de réseau (1).

2. Nœud de réseau (1) selon la revendication 1, dans lequel les instructions (56) pour transmettre l'élément de contenu de mise en cache chiffré comprennent des instructions (56) qui, lorsqu'elles sont exécutées par le processeur (50), amènent le nœud de réseau (1) à transmettre l'élément de contenu de mise en cache chiffré, dans lequel l'élément de contenu de mise en cache chiffré est contrôlé par le nœud de réseau (1).

3. Nœud de réseau (1) selon l'une quelconque des revendications 1 ou 2, comprenant en outre des instructions (56) qui, lorsqu'elles sont exécutées par le processeur (50), amènent le nœud de réseau (1) à :
transmettre un élément de contenu de mise en cache auxiliaire à la pluralité de dispositifs clients (2) pour la combinaison avec l'élément de contenu de mise en cache chiffré, la transmission de l'élément de contenu de mise en cache auxiliaire étant initiée par le nœud de réseau (1).

4. Nœud de réseau (1) selon l'une quelconque des revendications 1 à 3, comprenant en outre des instructions (56) qui, lorsqu'elles sont exécutées par le processeur (50), amènent le nœud de réseau (1) à :
transmettre une politique de rétention de cache à la pluralité de dispositifs clients (2).

5. Nœud de réseau (1) selon l'une quelconque des revendications 1 à 4, comprenant en outre des instructions (56) qui, lorsqu'elles sont exécutées par le processeur (50), amènent le nœud de réseau (1) à :
transmettre une politique de rapport à la pluralité de dispositifs clients (2).

6. Programme informatique (91) comprenant un code de programme informatique qui, lorsqu'il est exécuté sur un nœud de réseau (1), amène le nœud de réseau (1) à :
déterminer un besoin de stocker un élément de contenu de mise en cache dans une pluralité de dispositifs clients (2), dans lequel pour déterminer le besoin, le code de programme informatique qui, lorsqu'il est exécuté sur le nœud de réseau (1), amène le nœud de réseau (1) à déterminer une mesure de popularité pour l'élément de contenu de mise en cache ;
chiffrer l'élément de contenu de mise en cache ; et
transmettre l'élément de contenu de mise en cache chiffré à la pluralité de dispositifs clients (2) sur une connexion de diffusion, la transmission de l'élément de contenu de mise en cache chiffré étant initiée par le nœud de réseau (1).

7. Produit de programme informatique (56, 90) comprenant le programme informatique (91) selon la revendication 6 et un moyen lisible par ordinateur sur lequel le programme informatique (91) est stocké.
